Europäisches Patentamt

European Patent Office

Office européen des brevets

(11) Publication number: **0 099 416**
**B1**

# EUROPEAN PATENT SPECIFICATION

(45) Date of publication of patent specification: **11.03.87**

(51) Int. Cl.⁴: **C 07 C 89/02**

(21) Application number: **82106546.3**

(22) Date of filing: **20.07.82**

(54) Continuous process for preparing alkanolamines.

(43) Date of publication of application:
**01.02.84 Bulletin 84/05**

(45) Publication of the grant of the patent:
**11.03.87 Bulletin 87/11**

(84) Designated Contracting States:
**BE DE FR GB IT NL SE**

(56) References cited:
**SU-A- 682 508**
**US-A-3 723 530**

(73) Proprietor: **UNION CARBIDE CORPORATION**
**39 Old Ridgebury Road**
**Danbury Connecticut 06817 (US)**

(72) Inventor: **Gibson, Charles Arnold**
**2910 Macon Street**
**South Charleston West Virginia 25309 (US)**
Inventor: **Ahmed, Moinuddin**
**908 Mound Avenue**
**South Charleston West Virginia 25309 (US)**
Inventor: **Nelson, James Russell**
**1002 Dell Way**
**South Charleston West Virginia 25309 (US)**

(74) Representative: **Weinhold, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

## Description

This invention relates to a process for the preparation of alkanolamines and, more particularly, to a continuous process for preparing alkanolamines with high yields of monoalkanolamine by the reaction of alkylene oxides with a large excess of ammonia wherein the reaction mixture is maintained in a single phase as a supercritical fluid.

It is known that alkanolamines, which are used in a variety of commercial applications such as emulsification agents for soaps and cosmetics and as a starting material for the production of raw materials for detergents, wetting agents, emulsifiers, textile auxiliaries and the like, can be obtained by the reaction of alkylene oxides with ammonia or amines, the yield of alkanolamines being a mixture of mono-, di-, and trialkanolamine with, generally equal relative proportions of the three alkanolamines being frequently obtained. The relative proportions of these three alkanolamines in the product mixture, however, are known to depend on the relative quantities of alkylene oxide and ammonia that are reacted and processes have heretofore been used or suggested for achieving higher yields of one or more of the alkanolamines in the mixture which involve varying the proportion of such reactants, such as increasing the amount of ammonia relative to the alkylene oxide to obtain increased yields of monoalkanolamine, as well as by other process changes.

There is disclosed, for example, in US—A—2,196,554 a process for preparing mono-hydroxylalkylamines with yields of 90%—95% by reacting at least 30 parts by weight of ammonia with one part of alkylene oxide in a liquid phase reaction. Relatively dilute aqueous ammonia solutions are employed and the patent discloses that steam generated during concentration of the reaction product mixture is used for heating subsequent reaction product mixtures to separate ammonia gas therefrom, thus reducing the heat energy requirements for the process. Another process for preparing alkanolamines with extremely high yields of monoalkanolamines and only small amounts of the di- and trialkanolamines by reacting alkylene oxide with large excess amounts of ammonia in a liquid phase reaction system is disclosed in US—A—3,697,598. The molar ratio of ammonia relative to alkylene oxide used in the process is within the range of 10:1 to 80:1 and the reaction is carried out in the presence of a cation exchange resin catalyst. The process of the patent is described as being a continuous process which is capable of being run isothermally or, preferably, adiabatically at temperatures in the range of from 20°C to 250°C when pressures are employed that are high enough to keep the reactants and reaction products in the liquid phase throughout the reaction. There is, however, no disclosure either in the description or in the examples of the patent which show that high yields of alkanolamines of any type are obtained when the process is carred out either adiabatically or isothermally without the use of cation exchange resin catalysts, and patentees state that without a cation exchange catalyst it is not possible to realize an adiabatic reaction because it is too slow. Further, in US—A—3,723,530 there is also disclosed a process for preparing a mixture of alkanolamines by the liquid phase reaction of ethylene oxide and a large excess of ammonia, that is mole ratios of ammonia to ethylene oxide of from 14 to 40 to one. The patent teaches that when the reaction is carried out in the presence of up to 1 mole of diethanolamine per mole of ethylene oxide, the product obtained will be a mixture of only monoethanolamine and triethanolamine with little or no diethanolamine being present. The process of the invention is described as being capable of being run continuously, either isothermally or adiabatically. When operated continuously, the reaction is carried out in the liquid phase at temperatures in the range of from 60° to 150°C and pressures of from 2 to 12.2 MPa (20 to 120 atmospheres), and the monoethanolamine content of the product mixture generally does not exceed 70 percent by weight. A continuous embodiment of the process which is described as being preferred is directed to initially reacting ethylene oxide with an excess of ammonia in a liquid phase to prepare a mixture of alkanolamines from which diethanolamine is separated and recycled. The recycled diethanolamine, when added to fresh ammonia and ethylene oxide starting reactants in the proportions described, results in the net formation of reduced amounts of diethanolamine. This process, however, requires the continuous separation of diethanolamine from the product mixture and is operated in the liquid phase.

SU—A—682 508 discloses a process for the production of alkanolamines using an alkylene oxide having two or three carbon atoms and an excess of, among others, ammonia wherein water is added in an amount of 2 to 5% by weight as catalyst and the molar ratio of alkylene oxide to ammonia is from 1:3 to 1:20. However, said process is carried out in the liquid state and the yield of monoethanolamine is only 65% in the example reported in said patent.

According to the present invention there is provided a process for preparing alkanolamines with high yields of monoalkanolamines by reacting alkylene oxide with a large excess of ammonia in a single supercritical fluid phase. Said process is capable of running continuously under isothermal or adiabatic conditions. A reactor which is capable of operating as efficiently as possible as a "plug-flow" reactor may be employed for carrying out the reaction.

In accordance with the present invention, there is provided a continuous process for preparing alkanolamines with high yields of monoalkanolamine which comprises continuously reacting a flowing stream of a homogeneous mixture of an alkylene oxide having from two to four carbon atoms and ammonia in a molar ratio of ammonia to alkylene oxide within the range from 15:1 to 50:1 for the time necessary to form an alkanolamine product mixture containing predominately monoalkanolamine, which is characterized in that said mixture is maintained in a single supercritical fluid phase having a density of at least 240 kg/m³ (15 lbs/cu ft). Unreacted ammonia may be separated from the product mixture and recycled while the alkanolamine product mixture is recovered, or the product mixture may be used in the preparation of further amine products, if desired.

The temperatures employed for carrying out the reaction are preferably as high as possible so that the reaction will proceed at a suitable rate. The pressure should be high enough to maintain the reaction mixture in a single homogeneous phase as a supercritical fluid at any point during the reaction. The density of the supercritical fluid reaction mixture is an important consideration as to the rate at which the reaction proceeds and should be maintained as high as possible throughout the reaction and should be at least 240 kg/m³ (15 lbs/cu ft). The reaction can be carried out under isothermal or, preferably adiabatic conditions and, while no catalyst is required, the presence of a small amount of water in the reaction mixture has an advantageous catalytic effect. The term "supercritical fluid" as used herein is defined as the physical state of the reaction mixture wherein both the temperature and pressure conditions are above the critical values therefor. The term "plug-flow reactor" as used herein is defined as a reactor in which there is no mixing of a stream of fluids in the direction of the flow thereof through the reactor. Such plug-flow reactors may be non-adiabatic tubular or adiabatic pipe.

The process of the invention comprises continuously reacting a homogeneous flowing stream of a mixture of alkylene oxide having from two to four carbon atoms and ammonia in a molar ratio of ammonia to alkylene oxide within the range from 15:1 to 50:1 which is maintained in a single, homogeneous phase as a supercritical fluid preferably in a plug-flow reactor at temperatures at which the reaction proceeds above about 100°C and at pressures high enough to maintain the reaction mixture in a supercritical fluid phase having a density of at least 240 kg/m³ (15 lbs/cu ft) for the time necessary to form a product mixture composed predominately of monoalkanolamine (generally about 75%) and small amounts of di- and trialkanolamine. If desired, unreacted ammonia can be separated from said product mixture at the completion of the reaction with alkylene oxide and recycled while the alkanolamine product mixture is recovered. The mono-, di-, and trialkanolamines can also be separated, if desired. The product mixture, including unreacted ammonia, may also be used in the preparation of other amine products.

The alkylene oxides to which the process of the present invention is applicable is any alkylene oxide having from two to four carbon atoms, including ethylene oxide, propylene oxide, 1,2-butylene oxide, 2,3-butylene oxide, and isobutylene oxide.

In accordance with the present invention, it is essential that a large excess of ammonia relative to the alkylene oxide is used in the reaction to obtain yields of monoalkanolamines of at least 65 weight percent. It is advantageous to use from 20 to 35 moles, of ammonia for each mole of alkylene oxide to obtain yields of monoalkanolamine in many cases of from about 70 to 85 weight percent.

It is essential that the reaction of alkylene oxide and ammonia be carried out in a homogeneous, single supercritical fluid phase so that the reaction will proceed at a suitable rate. The reaction can be carried out under isothermal or, preferably, adiabatic conditions. The temperature at which the reaction should be carried out is within the range from about 100°C to about 200°C, though the upper limit of the temperature is not critical. Preferably, the reaction temperature is within the range from about the critical temperature of the reaction mixture (generally from about 130°C) to about 180°C. Under isothermal conditions, since the reaction is strongly exothermic, it is necessary to withdraw heat from the reaction mixture to keep the temperature approximately constant.

In the case when the reaction is to be carried out under adiabatic or nearly adiabatic conditions, the reactants are preheated, preferably to a temperature in the range from about 100°C to about 160°C, before they are introduced into the reactor. Because of the reaction heat involved, any selected initial reaction temperature rapidly increases and the initial reaction tempratures should be chosen so that the maximum desired temperature will be obtained during the period of residence of the reaction mixture within the reactor. The preferred maximum temperature is between about 170°C and 180°C, though the higher the reaction temperature, the higher the pressure that is necessary to maintain the density of the reaction mixture as high as possible.

At such reaction temperatures, it is essential that the pressures imposed on the system are high enough to maintain the reaction mixture in a single supercritical fluid phase. In any case, the reaction pressure should be at least as high as the critical pressure of the reaction mixture at any point encountered during the process. Preferably, the pressures imposed on the system are within the range from 17.2 to 24.3 MPa (170 to 240 atmospheres). The latter is a practical upper limit and is not critical.

As pointed out hereinabove, it is important that the reaction mixture is maintained in a single homogeneous phase as a supercritical fluid and that the density thereof is as high as possible so that the reaction will proceed at a suitable rate. The density of the reaction mixture should be above its critical density and be at least 240 kg/m³ (15 lbs/cu ft). Preferably, the density of the reaction mixture should be maintained in the range of from about 336 to 448 kg/m³ (about 21 to about 28 lbs/cu ft) or even higher, if practical. The mole ratio of the ammonia and alkylene oxide reactants and the reaction temperature have a significant effect on the density of the reaction mixture. It is important, therefore, that the reaction pressures are maintained as high as is practical so that the reaction mixture is not only maintained in a single supercritical fluid phase but that the density of said mixture is as high as possible.

While it is not essential that the process of the invention be carried out in the presence of any catalyst, advantageous embodiments of the process of the invention may be carried out with a small amount of water incorporated in the reaction mixture along with the alkylene oxide and ammonia reactants. It has been found that the presence of small amounts of water in the reaction mixture has an advantageous catalytic effect on the reaction rate for forming alkanolamines though it does not appear to affect the yield of monoalkanolamine in the product mixture. The amount of water that is present is not critical, and only small amounts of water will achieve the catalytic affect that may be desired. In general, from about 0.5 percent to about 5 percent by weight of water based on the weight of the reaction mixture may be present. Amounts of water greatly in excess of that which may be catalytically useful, however, should be avoided to limit the energy requirements needed to separate water from the product mixture.

In accordance with the present invention the process may be carried out continuously under isothermal or, preferably, adiabatic conditions in a plug-flow reactor or series of reactors which have a small cross-section in comparison to their length. A turbulent plug-flow reactor allows for the unidirectional flow of a process stream of reactants that minimizes back-mixing (axial mixing) within the reactor. The reactor may be provided with heat exchange means to maintain the temperature of the flowing reaction mixture at desired levels but such temperature control means would not be needed if the reaction is carried out under adiabatic conditions.

In the continuous reaction process of the invention, a liquid mixture of the ammonia and alkylene oxide reactants in the molar ratios hereinabove described, preferably with a small amount of water admixed therewith, is preheated and then fed to the reactor through an inlet section therein where a swirling motion is imposed on the feed stream. When a tubular reactor (non-adiabatic) is employed, the reaction may be controlled to proceed within a relatively narrow temperature range such as, for example, about 20°C though the temperature of the feed mixture may be varied over a wide temperature range, such as, for example, from about 20° to about 100°C. Under adiabatic conditions, the mixture of reactants should be preheated to a temperature, from between about 100°C to about 160°C, so that the maximum desired reaction temperature (generally from about 170° to 200°C) will be attained during the period of residence of the reaction mixture within the reactor or series of reactors. The pressure within the reactor shall be high enough so that the reaction mixture is maintained in a single, homogeneous phase as a supercritical fluid having the highest possible density at any point within the reactor.

The throughput rate of the reaction mixture should be chosen to provide a residence time within the reactor or reactors sufficient to permit the reaction to proceed to completion, generally less than about 1/2 hour. In an adiabatic reactor having the inlet feed configuration herein described, a velocity of from about 4.5 to about 15 cm/second (about 0.15 to about 0.5 feet/second) or even higher of the fluid stream may be advantageously employed to permit plug-flow operation. At the completion of the reaction, that is generally when all the alkylene oxide has been reacted, the unreacted ammonia can be separated from the product mixture by means known in the art, such as by reducing the pressure on the product mixture to below that at which the ammonia is in a gaseous phase or by distilling under pressure, and the alkanolamine product mixture may be recovered. The unreacted, separated ammonia can then be recycled, if desired, by repressurizing or condensing to a liquid state prior to mixing with fresh alkylene oxide. The alkanolamine analogues in the product mixture may also be separated by known distillation methods. The product mixture obtained during the continuous reaction process may also be used without further treatment as a starting material for the preparation of other organic amines.

The present invention will be further described with reference to the accompanying drawing in which:

Fig. 1 is a schematic showing of a typical adiabatic reaction system for use in the invention.

Fig. 2 is a schematic illustration of an adiabatic plug flow reactor suitable for use in the invention.

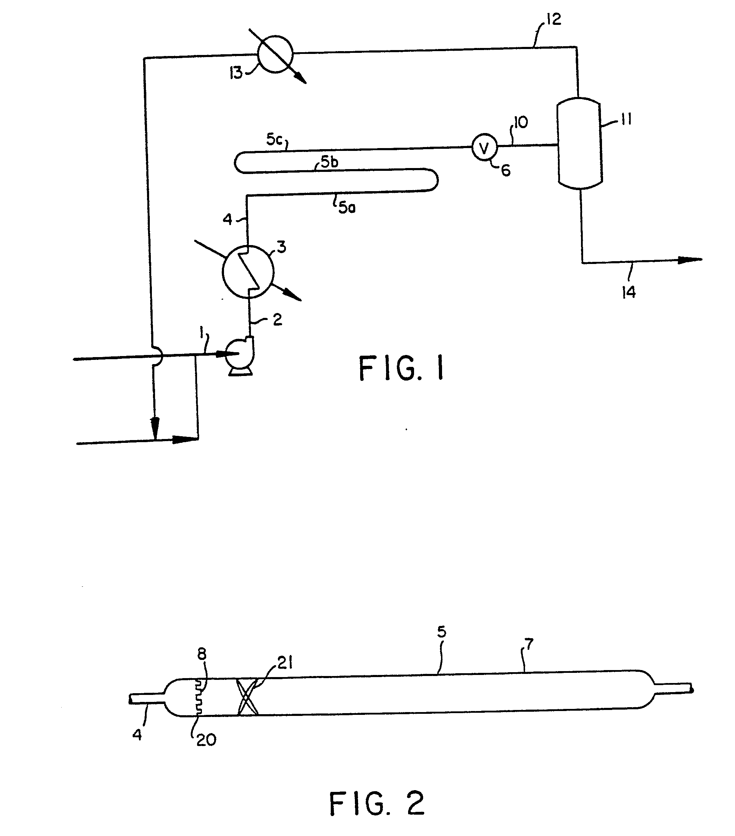

Referring to Fig. 1 of the drawing, liquid ammonia and alkylene oxide are blended in the proportions herein described in the feed pipe 1. Small amounts of water may also be added, if desired. The mixture of reactants is pumped through line 2 to a preheater 3 where the mixture is heated to a temperature in the range from about 100°C to about 160°C and then fed through an axial inlet pipe 4 to the adiabatic reactor. The adiabatic reactor may be a single plug-flow reactor or, as shown, a series of plug-flow reactor stages 5a, 5b, and 5c, each of which has an axial inlet pipe. Means are provided for imposing a swirling motion on the reaction mixture feed stream entering each reactor stage to minimize thermal stratification therein without increasing axial-mixing. The pressure within each of the reactor stages is maintained in the range, in general, from about 17.2 to about 24.3 MPa (about 170 to 240 atm) by a pressure control valve 6 so that the reaction mixture stream is in a single supercritical fluid phase at any point within the reactor and has a density of at least 240 kg/m³ (15 lb/cu ft).

The number of reactor stages employed may vary depending on the amount of product to be produced, the total length of reactor required to achieve the desired production rate, the feasible length for any reactor stage, and similar considerations. A typical system may comprise from 1 to 6 reactor stages of up to 30 m (100 feet) or more in length with 3 to 5 reactor stages being generally advantageously employed.

The product mixture in which all or substantially all of the alkylene oxide has been converted to alkanolamines is fed from the last adiabatic reactor stage 5c through pressure control valve 6 and line 10, where the product mixture stream is depressurized to between about atmospheric pressure and 4.05 MPa (40 atm), and then fed immediately into a flash separator 11. In the flash separator 11 a substantial amount of the unreacted ammonia rapidly separates from the product mixture as a gas which escapes at the top of the separator 11 in gaseous form and is recycled via line 12 through a compressor or condensor 13. The alkanolamine product mixture is drawn from the bottom of the separator 11 through line 14 for refining, if desired.

Fig. 2 illustrates an adiabatic reactor 5 typical of the reactor stages 5a, 5b, or 5c of Fig. 1 having an axial inlet pipe 4 into a generally cylindrical hollow body 7 having a small cross-section in comparison to its length which defines an internal, longitudinally extending passageway. Mounted within the inlet end 20 thereof are a pair of opposed, semi-elliptically shaped baffles 21 which impose a swirling motion to the reaction mixture fed therethrough to achieve a swirling plug-flow regime for the reactor. Intermediate the inlet pipe 4 and the opposed baffles 21 in the inlet end 20 of said reactor 5 is mounted a perforated plate 8 which serves to distribute and straighten the flow of fluid entering the cylindrical body 7 of said reactor 5. The semi-elliptically shaped baffles 21 which impose a swirling motion to the flowing stream of fluid within the reactor may be prepared from semi-elliptic plates having ratios of major to minor axis of from about 1.25:1 to about 2.0:1. Other means for imposing a swirling motion to the flow of fluid through the reactor may also be used such as, for example, baffles with varying configurations, spacing, numbers, size, and method of mounting within the inlet end of the reactor, the cross-section and length of the reactor, the velocity of flow through the reactor and the like being factors which must be considered in choosing the particular configuration desired.

In a typical embodiment of the process of the invention, liquid ethylene oxide and ammonia in a molar ratio of ammonia to ethylene oxide of 30:1 are blended in feed pipe 1 along with 3 percent by weight of water. The mixture of reactants is pumped through line 2 to a preheater 3 where the mixture is heated to a temperature of about 130°C and then fed to adiabatic plug-flow reactor stage 5a, a reactor having an outer diameter of 76 cm (30 inches) and a length of 30 m (100 feet) at a velocity of 9 cm/sec (0.3 ft/sec). The reaction mixture is subsequently fed at such velocity to 3 successive adiabatic plug-flow reactor stages of similar dimensions and inlet configuration. The pressure in the reactor stages is controlled by pressure control valve 6, high enough to maintain the reactant mixtures in a single, homogeneous phase as a supercritical fluid having a density of 384 kg/m³ (24 lbs/cu ft) at any point therein, generally about 20.3 to 21.3 MPa (about 200 to 210 atmospheres). After a total residence time in the reactor of about 25 to 30 minutes, the product mixture exits from the last reactor stage at a temperature of about 175°C and is fed through pressure control valve 6 and line 10 to flash separator 11. The product mixture passing through line 10 is depressurized to about 2.0 MPa (about 20 atmospheres) and when the product mixture enters the flash separator 11, unreacted ammonia is rapidly separated therefrom and exits from the top of the separator through line 12. The unreacted ammonia is then condensed to a liquid in condenser 12 and recycled.

The alkanolamine product mixture is fed from the bottom of separator 11 through line 14, refined by known distillation techniques and recovered.

This invention will become more clear when considered together with the following examples. Unless otherwise indicated, all parts and percentages are by weight.

Example 1

A reaction system and apparatus similar to that shown in the drawing (Fig. 1 and Fig. 2) except that the adiabatic plug-flow reactor is comprised of 4 reactor stages, each of which are 76 cm (30 inches) in diameter and 30 m (100 feet) long, was used in a continuous run in which ethylene oxide was reacted with ammonia. In this run a liquid ethylene oxide feed of 2,265 kg per hour (5000 pounds per hour) was mixed with a liquid ammonia-water mixture feed of 40,770 kg per hour (90,000 pounds per hour; 96 percent NH₃, 4 percent water) to give an ammonia to ethylene oxide mole ratio of 45:1. The mixed ammonia and ethylene oxide feed was preheated to a temperature of about 150°C and then pumped into the first reactor stage at a velocity of about 8.1 cm/sec (about 0.27 feet/sec). The pressure in the reactor stages was controlled to maintain the flowing stream in a single supercritical fluid phase having an average reaction mixture density of about 344 kg/m³ (about 21.5 lbs/cu ft). The pressure at the outlet of the final reactor stage was about 18.7 MPa (about 2700 psig) and the temperature of the product mixture at the outlet of the fourth reactor stage was about 170°C after a residence time within the reactor stages of 28 minutes. The product mixture from the final reactor stage was depressurized to about 2.8 MPa (about 400 psig) in the line leading to a flash-tank separator and substantially all the unreacted ammonia separated from the product mixture in the flash-tank separator. The ammonia was separated from the top of the separator and passed through a condenser where it was condensed to a liquid and then was recycled.

The product mixture was recovered from the bottom of the flash-tank separator, refined to remove the small amount of unreacted ammonia that was entrained therewith, and then collected. The composition of the product mixture was determined by gas chromatographic analysis to contain 80 percent by weight of monoethanolamine, 17.5 percent by weight of diethanolamine, and 2.5 percent by weight of triethanolamine. No measurable amount of unreacted ethylene oxide was found.

Example 2

Using the reaction system and apparatus of Example 1, a continuous run was made in which a liquid ethylene oxide feed of 2,356 kg per hour (5200 pounds per hour) was mixed with a liquid ammonia-water mixture feed of 40,770 kg per hour (90,000 pounds per hour; 97 percent $NH_3$ and 3 percent water) to give an ammonia to ethylene oxide mole ratio of 44:1. The mixed ammonia and ethylene oxide feed was preheated to a temperature of about 154°C and pumped into the first reactor stage at a velocity of about 7.8 cm/sec (about 0.26 ft/sec). The pressure in the reactor stages was controlled to maintain the flowing stream of reactants in a single supercritical fluid phase having an average reaction mixture density of about 360 $kg/m^3$ (about 22.5 lbs/cu ft). The pressure at the outlet of the final reactor stage was about 20.8 MPa (about 3000 psig) and the temperature of the product mixture at the outlet of the final reactor stage was about 174.5°C after a residence time of 29 minutes.

The temperature of the reaction mixture at the outlet of each of the reactor stages was found to be:

at the outlet of the first reactor stage—166°C;

at the outlet of the second reactor stage—169.6°C;

at the outlet of the third reactor stage—174.8°C.

The product mixture from the final reactor stage was depressurized to about 2.8 MPa (about 400 psig) and fed to a flash-tank separator where substantially all the unreacted ammonia rapidly separated from the product mixture and was then taken from the top of the separator, condensed to a liquid and recycled.

The product mixture recovered from the bottom of the separator was collected and determined to have the following composition:

83 percent by weight monoethanolamine

15 percent by weight diethanolamine

2 percent by weight triethanolamine.

No measurable amount of unreacted ethylene oxide was found in the product mixture.

Example 3

Using the reaction system and apparatus of Example 1, a continuous run was made in which a liquid ethylene oxide feed of 4,530 kg per hour (10,000 pounds per hour) was mixed with a liquid ammonia-water mixture feed of 52,640 kg per hour (114,000 pounds per hour; (97.5 percent $NH_3$, 2.5 percent water) to give an ammonia to ethylene mole ratio of 29:1. The reactant mixture was preheated to a temperature of about 150°C and pumped into the first reactor stage at a velocity of 9.9 cm/sec (0.33 ft/sec). The pressure in the reactor stages was controlled to maintain the reactant mixture in a single supercritical fluid phase having an average reaction mixture density of about 368 $kg/m^3$ (about 23 lbs/cu ft).

The pressure at the outlet of the final reactor was about 20.8 MPa (about 3,000 psig) and the temperature of the product mixture at the outlet of the final reactor stage was about 180°C after a residence time of 23 minutes.

Analysis of the product mixture after separating unreacted ammonia was determined to be:

76.2 percent by weight of monoethanolamine

20.8 percent by weight of diethanolamine

3.0 percent by weight of triethanolamine.

It was also determined that 0.1 percent unreacted ethylene oxide was present in the product mixture.

**Claims**

1. A continuous process for preparing alkanolamines with high yields of monoalkanolamines which comprises continuously reacting a flowing stream of a homogeneous mixture of an alkylene oxide having from 2 to 4 carbon atoms and ammonia in a molar ratio of ammonia to alkylene oxide within the range from 15:1 to 50:1 for the time necessary to form an alkanolamine product mixture containing predominantly monoalkanolamine, characterized in that said mixture is maintained in a single supercritical fluid phase having a density of at least 240 $kg/m^3$ (15 lbs/cu ft).

2. The process of claim 1 wherein said homogeneous mixture is reacted in a plug flow reactor, said stream flowing in said reactor in a manner that minimizes back-mixing.

3. The process of one or more of claims 1 and 2 wherein said homogeneous mixture of reactants also contains a small catalytic amount of water.

4. The process of one or more of claims 1 to 3 wherein a swirling motion is imposed on the stream of reactants flowing through said reactor to avoid thermal stratification.

5. The process of one or more of claims 1 to 4 wherein unreacted ammonia is separated from the alkanolamine product mixture after completion of the reaction of the alkylene oxide.

6. The process of claim 5 wherein said separated unreacted ammonia is liquified and recycled for reaction with fresh amounts of alkylene oxide.

7. The process of one or more of claims 1 to 6 wherein the reaction is carried out under adiabatic conditions at a temperature of up to 200°C.

8. The process of one or more of claims 1 to 7 wherein the reaction is carried out at pressures in the range from 17.2 to 24.3 MPa (170 atmospheres to 240 atmospheres).

## Patentansprüche

1. Ein kontinuierliches Verfahren zur Herstellung von Alkanolaminen mit hohen Ausbeuten an Monoalkanolaminen, das umfaßt: die kontinuierliche Umsetzung eines fließenden Stromes aus einer homogenen Mischung eines Alkylenoxids mit 2 bis 4 Kohlenstoffatomen und Ammoniak in einem molaren Verhältnis von Ammoniak zu Alkylenoxid innerhalb des Bereiches von 15:1 bis 50:1 für die Zeit, die notwendig ist, um eine Alkanolaminproduktmischung, die vorherrschend Monoalkanolamin enthält, zu bilden, dadurch gekennzeichnet, daß die Mischung in einer einzigen superkritischen fluiden Phase mit einer Dichte von mindestens 240 kg/m³ (15 lbs/cu ft) gehalten wird.

2. Verfahren nach Anspruch 1, worin die homogene Mischung in einem sogenannten Plug-flow-Reaktor umgesetzt wird, wobei der Strom in diesem Reaktor in einer Weise fließt, daß ein Rückmischen auf einem Minimum gehalten wird.

3. Verfahren nach einem der Ansprüche 1 und 2, worin die homogene Mischung der Reaktionsteilnehmer auch eine geringe katalytische Menge Wasser enthält.

4. Verfahren nach einem oder mehreren der Ansprüche 1 bis 3, worin auf den Strom der Reaktionsteilnehmer, der durch den Reaktor fließt, eine wirbelnde Bewegung ausgeübt wird, um eine thermische Schichtenbildung zu vermeiden.

5. Verfahren nach einem oder mehreren der Ansprüche 1 bis 4, worin der nicht umgesetzte Ammoniak nach Beendigung der Reaktion des Alkylenoxids aus der Alkanolaminproduktmischung abgetrennt wird.

6. Verfahren nach Anspruch 5, worin der abgetrennte, nicht umgesetzte Ammoniak verflüssigt und mit frischen Mengen an Alkylenoxid zur Reaktion zurückgeführt wird.

7. Verfahren nach einem oder mehreren der Ansprüche 1 bis 6, worin die Reaktion unter adiabatischen Bedingungen bei einer Temperatur bis zu 200°C durchgeführt wird.

8. Verfahren nach einem oder mehreren der Ansprüche 1 bis 7, worin die Reaktion bei Drucken im Bereich von 17,2 bis 24,3 MPa (170 bis 240 at) durchgeführt wird.

## Revendications

1. Procédé continu de production d'alcanolamines avec de hauts rendements en monoalcanolamines, qui consiste à faire réagir en continu un courant d'un mélange homogène d'un oxyde d'alkylène ayant 2 à 4 atomes de carbone et d'ammoniac dans un rapport molaire de l'ammoniac à l'oxyde d'alkylène compris dans l'intervalle de 15:1 à 50:1 pendant la durée nécessaire pour former comme produit un mélange d'alcanolamines contenant principalement une monoalcanolamine, caractérisé en ce que ledit mélange est maintenu en une phase fluide surcritique unique ayant une masse volumique d'au moins 240 kg/m³ (15 lb/ft³).

2. Procédé suivant la revendication 1, dans lequel ledit mélange homogène est amené à réagir dans un réacteur à écoulement bouchon, ledit courant s'écoulant dans le réacteur d'une manière qui minimise un mélange en retour.

3. Procédé suivant une ou plusieurs des revendications 1 et 2, dans lequel ledit mélange homogène de corps réactionnels contient également une petite quantité catalytique d'eau.

4. Procédé suivant une ou plusieurs des revendications 1 à 3, dans lequel un mouvement de tourbillonnement est imposé au courant de corps réactionnels s'écoulant dans le réacteur pour éviter une stratification thermique.

5. Procédé suivant une ou plusieurs des revendications 1 à 4, dans lequel l'ammoniac n'ayant pas réagi est séparé du mélange d'alcanolamines obtenu comme produit après la fin de la réaction de l'oxyde d'alkylène.

6. Procédé suivant la revendication 5, dans lequel l'ammoniac n'ayant pas réagi qui a été séparé est liquéfié et recyclé en vue de sa réaction avec des quantités nouvelles d'oxyde d'alkylène.

7. Procédé suivant une ou plusieurs des revendications 1 à 6, dans lequel la réaction est conduite dans des conditions adiabatiques à une température s'élevant à 200°C.

8. Procédé suivant une ou plusieurs des revendications 1 à 7, dans lequel la réaction est conduite à des pressions comprises dans l'intervalle de 17,2 à 24,3 MPa (170 à 240 atmosphères).

FIG. 1

FIG. 2